# EUROPEAN PATENT APPLICATION

(11) **EP 4 773 603 A1**
(43) Date of publication of application: **08.07.2026**
(21) Application number: 25305008.2
(22) Date of filing: 03.01.2025
(51) Int. Cl.: H04N 19/117, H04N 19/154, H04N 19/172, H04N 19/27, H04N 19/59, H04N 19/61, H04N 19/70, H04N 19/85

(54) **PICTURE RESOLUTION FOR FILM GRAIN SYNTHESIS**

(71) Applicant: InterDigital CE Patent Holdings, SAS, 75017 Paris (FR)
(72) Inventor: DE LAGRANGE, Philippe, 35830 BETTON (FR); FRANCOIS, Edouard, 35890 BOURG DES COMPTES (FR); AMEUR, Zoubida, 35510 CESSON SEVIGNE (FR); LEFEBVRE, Frederic, 35000 RENNES (FR)
(74) Representative: Interdigital

(57) **Abstract**

In various implementations, methods and devices are disclosed that indicate to the decoder a picture dimension to be used for the film grain synthesis, the picture dimension persisting for the coded video sequence (or for the coded layer video sequence) to which the FGC SEI message(s) is(are) associated. For instance, in one embodiment, a method of video decoding or rendering is disclosed that comprises obtaining a film grain picture dimension at which a film grain synthesis should be applied; obtaining a picture of a video sequence, the picture having a picture dimension; upon determining that the film grain picture dimension is different from the picture dimension, resampling the picture to the film grain picture dimension; and applying film grain synthesis to the resampled picture.

## Description

### BACKGROUND

The present application is related to synthesis of film grain after decoding of pictures. Film grain corresponds to a granular texture either naturally present in digital movies, or artistically added in production phase. Preserving the film grain is a challenge for video encoders because it generally corresponds to a signal with low spatial and temporal correlation, which makes spatial and temporal prediction inefficient. It is also mostly present in high frequencies, which are usually filtered with other noise and textures by the quantization of transform coefficients and in-loop filters used by most video encoders. Preserving film grain requires to use very high bit-rates which are not relevant for most applications. To address these issues, film grain is synthetized after decoding based on metadata and Film Grain Characteristics (FGC) Supplemental Enhancement Information (SEI) message was developed for various video compression technologies.

### BRIEF SUMMARY

In various implementations, methods and devices are disclosed that indicate to the decoder a picture dimension (for instance defined at least by its width and height) to be used for the film grain synthesis, the indication persisting for the coded video sequence (or for the coded layer video sequence VLCS) to which the FGC SEI message(s) is(are) associated. Advantageously, the temporal stability and visual quality of film grain added to the decoded or rendered pictures are improved for instance when adaptive resolution coding is enabled.

Briefly stated, in one embodiment, a method of video decoding or rendering is disclosed that comprises obtaining a film grain picture dimension at which a film grain synthesis should be applied; obtaining a picture of a video sequence, the picture having a picture dimension; upon determining that the film grain picture dimension is different from the picture dimension, resampling the picture to the film grain picture dimension; and applying film grain synthesis to the resampled picture.

In one embodiment, a method of video encoding is disclosed that comprises signaling, in a bitstream, film grain resolution information that comprises at least one parameter that specifies a picture dimension at which a film grain synthesis should be applied.

One or more embodiments also provide an apparatus for video encoding, decoding or rendering comprising one or more processors and at least one memory coupled to said one or more processors, wherein said one or more processors are configured to perform the encoding, decoding or rendering method according to any of the embodiments described herein.

One or more embodiments also provide a computer program comprising instructions which when executed by one or more processors cause the one or more processors to perform the encoding, decoding or rendering method according to any of the embodiments described herein. One or more of the present embodiments also provide a computer readable storage medium having stored thereon instructions for encoding, decoding or rendering a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates an example of Reference Picture Resampling according to one or more embodiments of the present disclosure;
FIG. 5 illustrates an example of Reference Picture Resampling with film grain synthesis;
FIG. 6 and FIG. 7 are a flow chart illustrating a film grain synthesis process according to one or more embodiments of the present disclosure; and
FIG. 8a and FIG. 8b illustrate a process implementing more than one sets of film grain parameters specialized per picture resolution according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

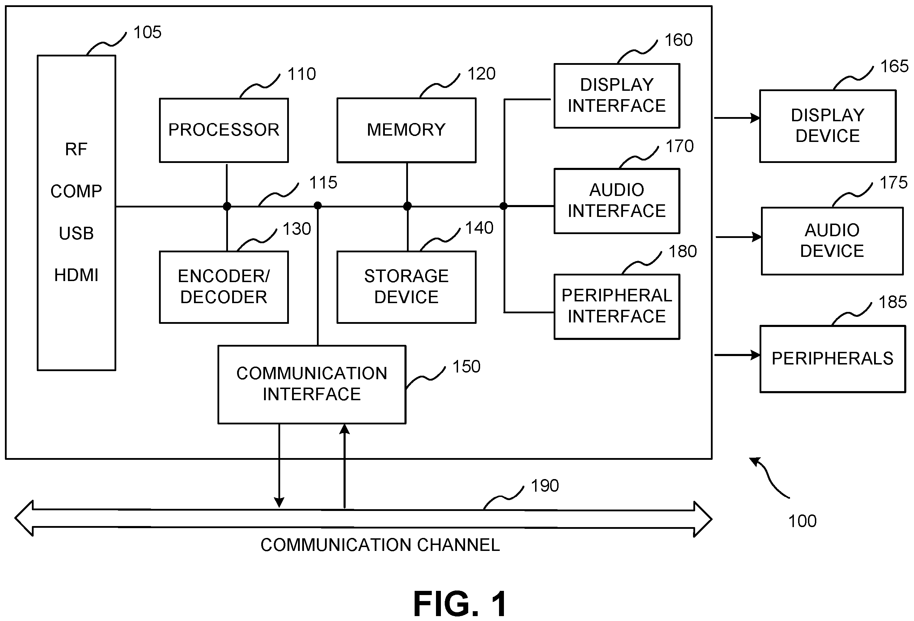

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

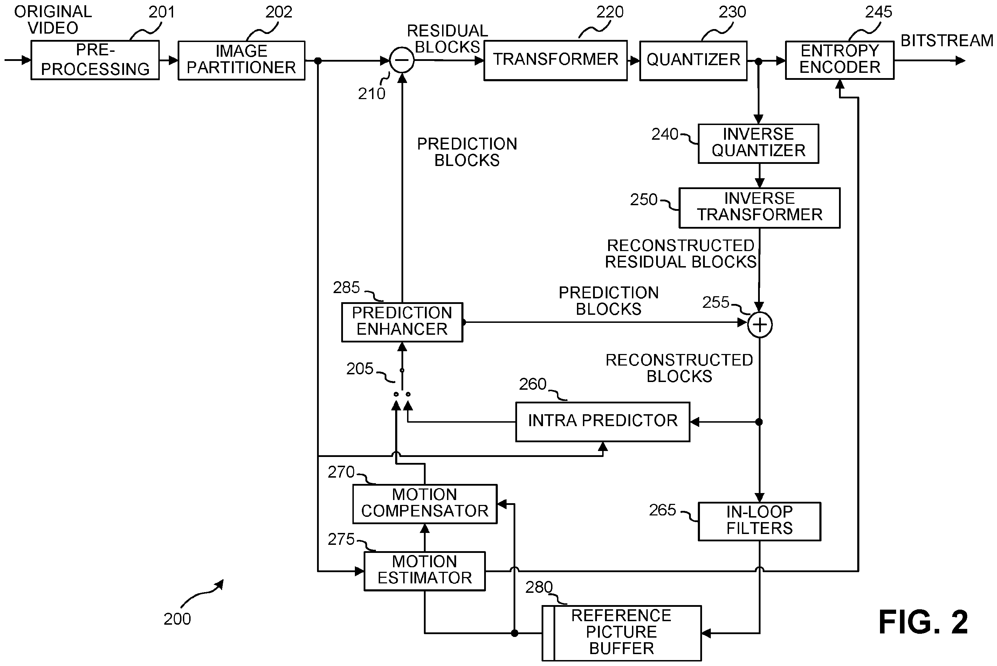

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

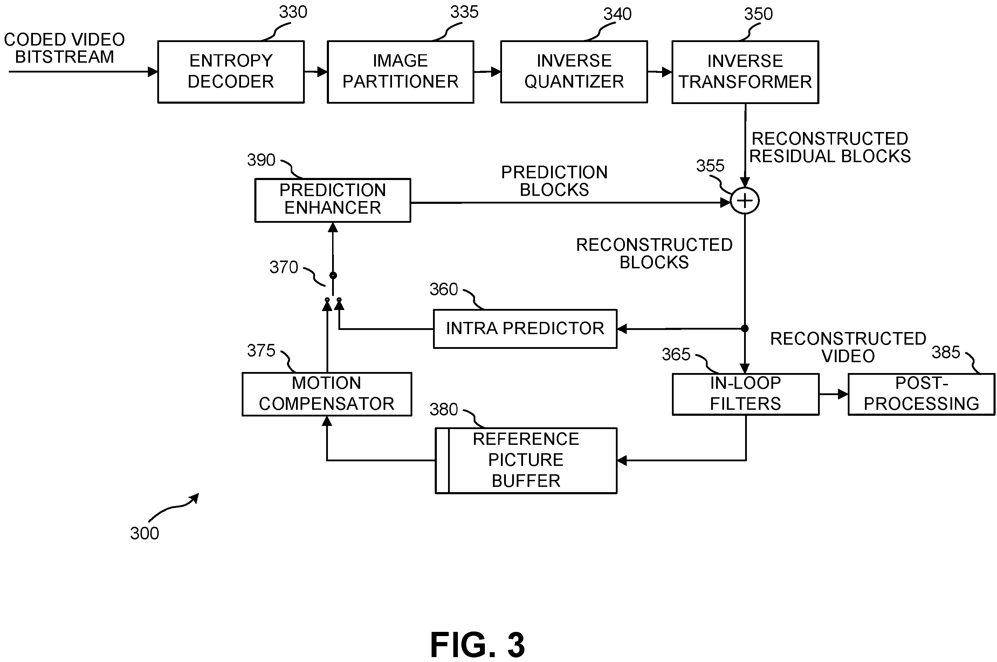

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, *U* and *V* (also denoted herein by C).

Referring generally to FIG. 2 and the video encoder 200, video data (e.g., one or more video frames) is encoded generally as described below. Prior to encoding, video data may be preprocessed by a precoding processor 201. The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include, for example, film grain analysis. The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor 385 can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor 201 described with respect to FIG. 2. The post-decoding processor can use metadata derived by the pre-encoding processor and/or signaled in the video bitstream.

The pre-processing 201 may have processed film grain for the video and may have involved generating Film Grain Characteristics FGC metadata (for example, a supplemental enhancement information (SEI) message) with the video data that are attached to the coded video bitstream. Then, the post-decoding processing 385 can use the FGC metadata to synthesize film grain for the decoded video. VVC specification does not include FGC SEI message, but instead refers to the Versatile Supplemental Enhancement Information messages for coded video bitstreams, Recommendation ITU-T H.274 | International Standard ISO/IEC 23002-7 (VSEI specification).

The FGC SEI message is a container used to signal to video decoders metadata related to a film grain signal, that can be synthetized and superposed to the decoded video as a post-decoding process. The FGC SEI message can define grain texture properties either using auto-regressive spatial filter coefficients (called "auto-regressive mode"), or spatial frequency cutoffs (called "frequency filtering mode"), both applicable to a white gaussian noise. In frequency-filtering mode, vertical, horizontal, low and high cutoff frequencies can be specified and transmitted in the bitstream, in addition to grain amplitude (or "scaling factor"), for each intensity interval. Those parameters represent a hypothetical synthetic grain that can be generated by filling a 16x16 DCT block with gaussian random noise of the given amplitude, then forcing to zero DCT coefficients out of the given frequency cutoffs, then performing the 2-dimensional inverse DCT.

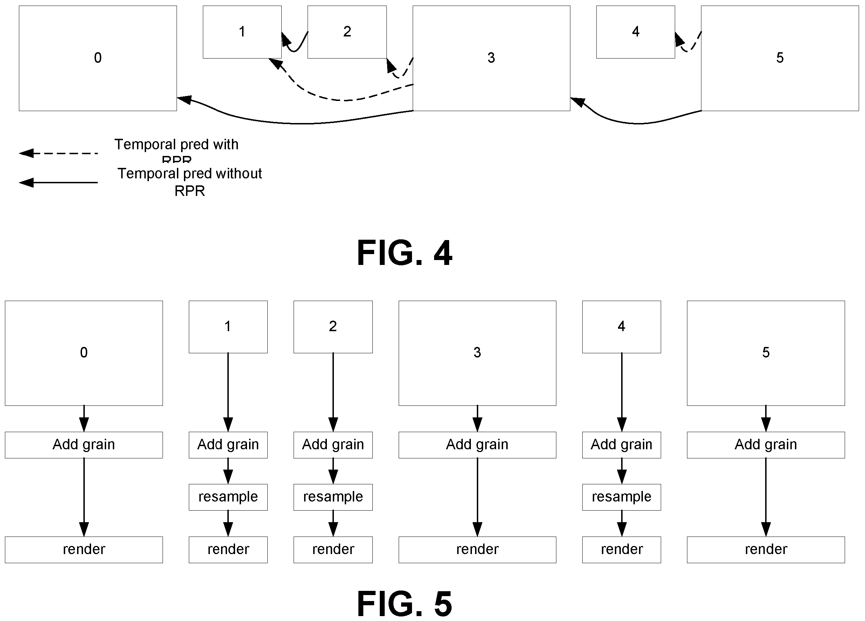

Besides, VVC defines a tool named "Reference Picture Resampling" (RPR) that allows changing the resolution of coded pictures on the fly (adaptive resolution coding). FIG. 4 illustrates an example of Reference Picture Resampling according to one or more embodiments of the present disclosure. The pictures 1 to 5 are stored in Decoded Picture Buffer (DPB) at their actual coded/decoded resolution (or dimension), which may be lower than the video spatial resolution signalled in the Video Parameter set (VPS) and Sequence parameter set (SPS) structures of the bitstream (syntax elements vps_ols_dpb_pic_width, vps_ols_dpb_pic_height in VPS, sps_pic_width_max_in _luma_samples, sps_pic _height_max_in_luma_samples in SPS). The actual picture resolution is signaled in the Picture Parameter Set (PPS). When a picture being coded at a given resolution uses a reference picture that is not at the same resolution, a "reference picture resampling" (RPR) of the texture is applied (temporal motion prediction is not allowed when the current and reference pictures resolutions differ). The downsampling ratio is at maximum equal to 2, and upsampling ratio at maximum equal to 8, in both horizontal and vertical dimensions.

Adaptive resolution coding is enabled in VVC thanks to a SPS flag, sps_res_change_in_clvs_allowed_flag, that controls the activation of this feature. Its semantics is provided in the VVC semantics excerpt below:

| |
|---|
| **sps_res_change_in_clvs_allowed_flag** equal to 1 specifies that the picture spatial resolution might change within a CLVS referring to the SPS. sps_res_change_in_clvs_allowed_flag equal to 0 specifies that the picture spatial resolution does not change within any CLVS referring to the SPS. When not present, the value of sps_res_change_in_clvs_allowed_flag is inferred to be equal to 0. |

Where CLVS stands for coded layer video sequence.

In the VSEI specification, it is indicated that the FG synthesis process is achieved considering the picture dimensions defined by the 2 parameters specifying the width and the height of the picture in number of luma samples PicWidthInLumaSamples and PicHeightInLumaSamples. Below is an excerpt from the VSEI text:

| |
|---|
| Use of this SEI message requires the definition of the following variables: |
| - A picture width and picture height in units of luma samples, denoted herein by PicWidthInLumaSamples and PicHeightInLumaSamples, respectively. |

In the VVC text, PicWidthInLumaSamples and PicHeightInLumaSamples are indicated to be equal to the picture dimensions (width and height) that are signaled in the Picture Parameter Set (PPS).

| |
|---|
| **D.12.2 Use of the film grain characteristics SEI message** |
| For purposes of interpretation of the film grain characteristics SEI message, the following variables are specified: |
| - PicWidthInLumaSamples and PicHeightInLumaSamples are set equal to pps_pic_width_in_luma_samples and pps_pic_height_in_luma_samples, respectively. |
| - ChromaFormatldc is set equal to sps_chroma_format_idc. |
| - BitDepth_{Y} and BitDepth_{C} are both set equal to BitDepth. |

Because VVC supports adaptive resolution coding, defining the picture dimensions for the film grain synthesis as the picture dimensions signaled in the PPS means that film grain is synthetized at the dimension at which the picture was actually coded. However, the film grain characteristics depend on the picture dimensions. When downsampling a picture, the grain has different properties from the original grain present in the full resolution picture. For example, downsampling results in losing the highest frequencies present in the original picture. Also, when a film grain signal is synthesized on top of a picture that is further resampled to reach the original resolution, the film grain of the resampled picture has different characteristics than the film grain at lower resolution. FIG. 5 illustrates an example of Reference Picture Resampling with film grain synthesis as currently implemented by a decoder. As a result, this may impact the temporal stability and visual quality of film grain added to the decoded pictures and rendered on the end device.

Therefore, further improvements to film grain synthesis are desirable when Reference Picture Resampling is enabled. The present disclosure proposes indicating to the decoder a recommended/preferred resolution to be used for the film grain synthesis, that persists for the coded video sequence (or for the coded layer video sequence) to which the FGC SEI message(s) is (are) associated.

According to a first embodiment, it is proposed to perform film grain synthesis at a recommended or preferred picture dimension (defined by its width and its height), that is fixed for the sequence (CLVS).

According to a second embodiment, it is proposed to obtain the recommended picture dimension by the decoder as the maximum picture dimension signaled in the SPS.

According to a third embodiment, it is proposed to obtain the recommended picture dimension by the decoder as the cropped picture dimension signaled in the SPS.

According to a fourth embodiment, it is proposed to signal, in a new SEI message, the recommended picture dimension.

Although features of the embodiments are described herein in particular combinations, those of ordinary skill in the art will appreciate that such features may be used alone or in any combination with the other features. For instance, features of the second, third or fourth embodiment may be used in combination with the first embodiment. Additionally, the terms "dimension" is used to specify a size of the decoded picture, for instance by its width and its height, however the term "dimension", "dimensions", "size" or "resolution" may be used interchangeably.

### Feature(s) associated with the first embodiment are provided herein.

In the first embodiment, the film grain synthesis is performed at a recommended / preferred picture size (width and height), that is fixed for the sequence (CLVS). In a first variant, the recommended picture dimension is signaled in the bitstream that embeds the coded pictures of the sequence. In another variant, it is left to the application to choose the fixed picture size at which the film grain synthesis is applied.

The post-decoding film grain synthesizer is recommended to perform the process at these recommended picture dimension. Before synthesizing grain, a resampling process is recommended to be applied to the decoded picture (that is to the input picture of the film grain synthesizer) when needed to match the recommended picture dimension.

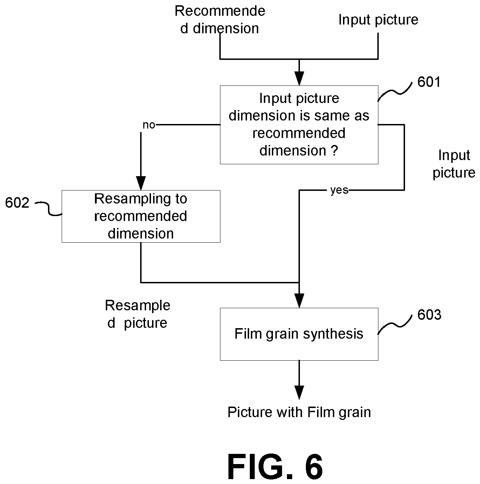

FIG. 6 is a flow chart illustrating a film grain synthesis process according to one or more embodiments of the present disclosure. The inputs of the process are the input picture (e.g. the decoded picture, or a picture obtained after some post-decoding filtering processing of the decoded picture, such as conversion from 4:2:0 YUV to 4:4:4 RGB, frame interpolation, tone mapping), its associated properties (in particular, its dimensions in width and height), and the recommended dimensions at which the film grain synthesis should be performed. A check whether the picture dimensions are the same as the recommended dimensions is achieved 601. When the picture dimensions are same as the recommended dimensions, the film grain synthesis can be directly applied to the input picture 603. When the picture dimensions are different than the recommended dimensions, a resampling to the recommended dimensions is first applied to the input picture 602. Then the film grain synthesis is applied to the resampled picture 603.

### Feature(s) associated with the second embodiment are provided herein.

In a second embodiment, the recommended picture dimensions are the maximum picture dimensions signaled in the SPS, corresponding in the VVC specification to the syntax elements **sps_pic_width_max_in_luma_samples** and **sps_pic_height_max_in_luma_samples** (as shown in excerpt of SPS syntax below).

| | |
|---|---|
| seq_parameter_set_rbsp( ) { | **Descriptor** |
| **sps_seq_parameter_set_id** | |
| ... | u(4) |
| **sps_ref_pic_resampling_enabled_flag** | u(1) |
| if( sps_ref_pic_resampling_enabled_flag ) | |
| **sps_res_change_in_clvs_allowed_flag** | u(1) |
| **sps_pic_width_max_in_luma_samples** | ue(v) |
| **sps_pic_height_max_inluma_samples** | ue(v) |
| **sps_conformance_window_flag** | u(1) |
| if( sps_conformance_window_flag ) { | |
| **sps_conf_win_left_offset** | ue(v) |
| **sps_conf_win_right_offset** | ue(v) |
| **sps_conf_win_top_offset** | ue(v) |
| **sps_conf_win_bottom_offset** | ue(v) |
| } | |
| ... | |

According to this embodiment, the VVC specification for film grain synthesis may be changed as follows:

| |
|---|
| **D.12.2 Use of the film grain characteristics SEI message** |
| For purposes of interpretation of the film grain characteristics SEI message, the following variables are specified: |
| - PicWidthInLumaSamples and PicHeightInLumaSamples are set equal to sps_pic_width_max_in_luma_samples and sps_pic_height_max_in_luma _samples, respectively. |
| - ChromaFormatldc is set equal to sps_chroma_format_idc. |
| - BitDepth_{Y} and BitDepth_{C} are both set equal to BitDepth. |

In a variant, when adaptive resolution coding is enabled (for instance in VVC, when sps_res_change_in_clvs_allowed_flag is equal to 1), it is left to the application (external means) to choose the recommended fixed picture dimensions at which the film grain synthesis should be performed. An example of a modified VVC specification is provided below (addition highlighted by underlined).

| |
|---|
| **D.12.2 Use of the film grain characteristics SEI message** |
| For purposes of interpretation of the film grain characteristics SEI message, the following variables are specified: |
| - PicWidthInLumaSamples and PicHeightInLumaSamples are set equal to pps_pic_width_in_luma_samples and pps_pic_height_in_luma_samples, respectively. |
| - When (sps_res_change_in_clvs_allowed_flag is equal to 1), PicWidthInLumaSamples and PicHeightInLumaSamples mav be modified bv other means. It is recommended that PicWidthInLumaSamples and PicHeightInLumaSamples are constant for all the pictures of the CLVS for which the film grain synthesis is applied. When the width and height of the decoded pictures are not the same as PicWidthInLumaSamples and PicHeightInLumaSamples, an unspecified conversion process is expected to be applied to convert the decoded pictures to pictures of width and height equal to PicWidthInLumaSamples and PicHeightInLumaSamples. respectively. |
| - ChromaFormatldc is set equal to_sps_chroma_format_idc. |
| - BitDepth_{Y} and BitDepth_{C} are both set equal to BitDepth. |

Alternate wording to "may be modified by other means" are "may be determined by the application" or "may be provided externally".

Alternatively, the recommended picture dimensions are signaled in another high-level structure, for example, Adaptive Parameter Set (APS). In a variant, when several syntax structures, such as APS, are present in the CLVS, they should indicate identical recommended picture dimensions.

### Feature(s) associated with the third embodiment are provided herein.

In a third embodiment, the recommended fixed picture dimensions may also consider a possible cropping applied to the picture, such as for instance defined by the SPS conformance window parameters sps_conf_win_left_offset, sps_conf_win_right_offset, sps_conf_win_top_offset and sps_conf_win_bottom_offset, whose VVC semantics is provided in text below.

| |
|---|
| **sps_conf_win_left_offset, sps_conf_win_right_offset, sps_conf_win_top_offset,** and **sps_conf_win_bottom_offset** specify the cropping window that is applied to pictures with pps pic width in luma samples equal to sps pic width max in luma samples and pps pic height in luma samples equal to sps pic heigh max in luma samples. When sps_conformance_window_flag is equal to 0, the values of sps_conf_win_left_offset, sps_conf_win_right_offset, sps_conf_win_top_offset, and sps_conf_win_bottom_offset are inferred to be equal to 0. |
| The conformance cropping window contains the luma samples with horizontal picture coordinates from SubWidthC * sps_conf_win_left_offset to sps_pic_width_max_in_luma_samples - ( SubWidthC * sps_conf_win_right_offset + 1 ) and vertical picture coordinates from SubHeightC * sps_conf_win_top_offset to sps_pic_height_max_in_luma_samples - ( SubHeightC * sps_conf_win_bottom_offset + 1 ), inclusive. |
| The value of SubWidthC * ( sps_conf_win_left_offset + sps_conf_win_right _offset) shall be less than sps_pic_width_max_in_luma_samples, and the value of SubHeightC * (sps_conf_win_top_offset + sps_conf_win_bottom_offset ) shall be less than sps_pic_height_max_in_luma_samples. |

The recommended picture dimensions should match the cropped picture dimensions as inferred by the cropping window parameters signaled in the SPS.

### Feature(s) associated with the fourth embodiment are provided herein.

In a fourth embodiment, a new SEI message, "Film Grain Resolution Information (FGRI) SEI message" is defined to indicate the recommended fixed picture dimensions at which the film grain synthesis should be applied.

An example of syntax is provided below.

| | |
|---|---|
| film grain resolution information! payloadSize ) { | **Descriptor** |
| **fgri_cancel_flag** | u(1) |
| if( !fgri_characteristics cancel _flag) ζ | |
| **fgri_width_in_luma_samples** | ue(v) |
| **fgri_height_in_luma_samples** | ue(v) |
| **fgri_persistence_flag** | u(1) |
| } | |
| } | |

The corresponding semantics may be provided as follows:
**fgri_cancel_flag** equal to 1 indicates that the SEI message cancels the persistence of any previous film grain resolution information SEI message in output order that applies to the current layer. fgri_cancel_flag equal to 0 indicates that film grain resolution information follows.
**fgri_width_in_luma_samples** specifies the recommended width to be used for the interpretation of FGC SEI messages present in the CLVS. fgri_width_in_luma_samples shall not be equal to 0, and shall be less than or equal to sps_pic_width_max_in_luma_samples. When present, it is recommended to set the variable PicWidthInLumaSamples defined in the Film grain characteristics SEI message semantics equal to fgri_width_in_luma_samples.
**fgri_height_in_luma_samples** specifies the recommended height to be used for the interpretation of FGC SEI messages present in the CLVS. fgri_height_in_luma_samples shall not be equal to 0, and shall be less than or equal to sps_pic_height_max_in_luma_samples. When present, it is recommended to set the variable PicHeightInLumaSamples defined in the Film grain characteristics SEI message semantics equal to fgri_height_in_luma_samples.
If the input pictures of the film grain synthesis have width or height different from fgri_width_in_luma_samples and fgri_height_in_luma_samples, respectively, a resampling process not specified in this specification may be applied to generate resampled pictures with width and height equal to fgri_width_in_luma_samples and fgri_height_in_luma_samples, respectively.
**fgri_persistence_flag** specifies the persistence of the film grain resolution information SEI message for the current layer.
fgri_persistence_flag equal to 0 specifies that the film grain resolution information SEI message applies to the current decoded picture only.
fgri_persistence_flag equal to 1 specifies that the film grain resolution information SEI message applies to the current decoded picture and persists for all subsequent pictures of the current layer in output order until one or more of the following conditions are true:
   - A new CLVS of the current layer begins.
   - The bitstream ends.
   - A picture in the current layer in an AU associated with a film grain resolution information SEI message is output that follows the current picture in output order.

In a variant, it is required that when several FGRI SEI messages are present in the CLVS, they shall all indicate the same picture dimensions. Which may correspond to the following note.
Note: when several FGRI SEI messages are present in the CLVS, they shall have the same value of fgri_width_in_luma samples and fgri_height_in_luma_samples.

In another variant, an FGRI SEI message applies to all FGC SEI messages that follow, until the next FGRI SEI message.

In another variant, an FGRI SEI message applies to all FGC SEI messages that follow or refer to the current picture and replace any previous FGRI SEI message.

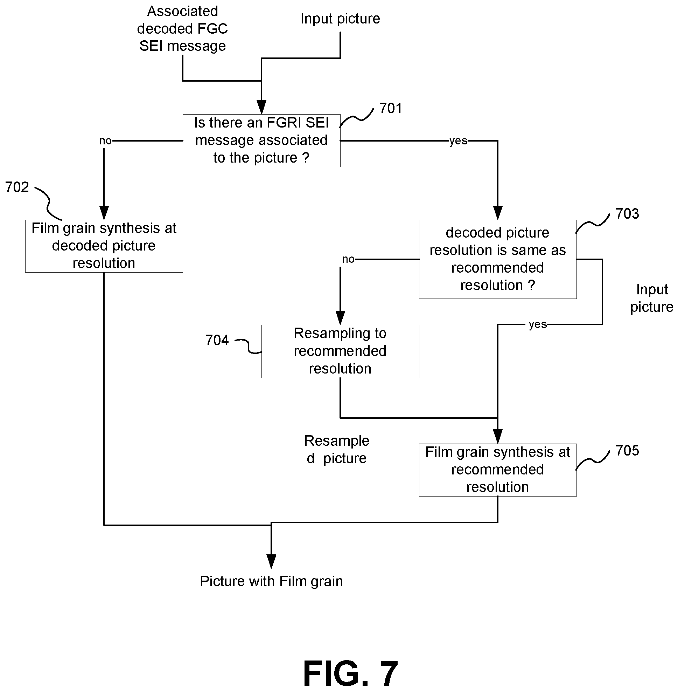

FIG. 7 is a flow chart illustrating a film grain synthesis process according to one or more embodiments of the present disclosure. The inputs of the process are the input (here named decoded) picture, its associated properties (in particular, its dimensions in width and height), and the decoded SEI message associated to the decoded picture. It is first checked in 701 whether an FGRI SEI message is associated to the decoded picture 701. If no, the film grain synthesis is applied 702 to the decoded picture at its resolution or in a variant, at the maximum resolution for example as indicated in the SPS. If there is an FGRI SEI message associated to the decoded picture, the message is decoded (not shown on FIG. 7) and a check 703 whether the picture dimensions are same as the recommended dimensions indicated in the FGRI SEI message is performed. When the picture dimensions are same as the recommended dimensions, the film grain synthesis can be directly applied 705 to the decoded picture. When the picture dimensions are different than the recommended dimensions, a resampling 704 to the recommended dimensions is first applied to the decoded picture. Then the film grain synthesis is applied 705 to the resampled picture.

In a variant, in the step 702 of Film grain synthesis at decoded picture resolution, "decoded picture resolution" may be replaced by "maximum picture resolution" as indicated for example in a SPS in VVC.

In yet another variant, the SEI message may contain other information related to the FG synthesis. For instance, all the information present in the FGC SEI message describing the parameters used for the film grain synthesis may be included. Which means that the FG parameters may be specialized per picture resolution. It is then possible to insert different FGRI SEI messages, FGRI_1 ... FGRI_N corresponding to different picture resolutions R1 ... RN, and whose FG parameters are adapted to a respective rendering resolution R1, ... or RN. A rendering device may therefore select the FGRI version that best fits the rendering resolution, or a resolution that has been selected by the application for the application of the film grain synthesis (that for sake of simplicity is also named rendering resolution). In a variant, the rendering resolution may be equal to one of the picture resolutions R1 ... RN in the FGRI. In another variant, the rendering resolution may be different (the FGRI version with the closest or just below picture resolution R1 ... RN may be selected) from any of picture resolutions R1 ... RN in the FGRI. In that case, the resampling is applied based on the selected Ri rather than rendering resolution of the device The film grain synthesis may be applied using the FG parameters from this selected FGRI version to the decoded picture, wherein a further resampling of the decoded picture to the rendering resolution R1 ... RN may be performed before applying the film grain synthesis.

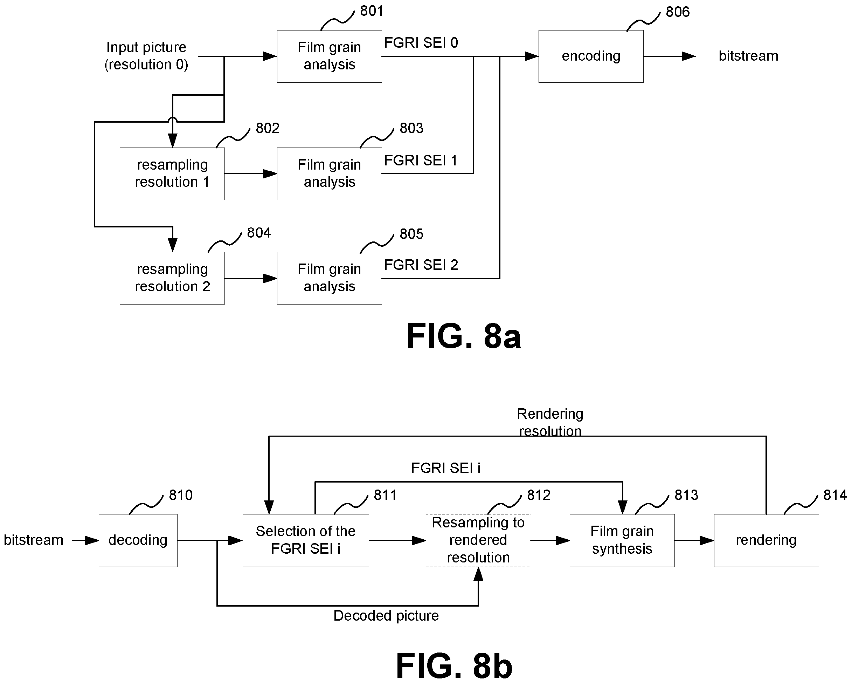

FIG. 8a and FIG. 8b illustrate a process implementing more than one sets of film grain parameters specialized per picture resolution according to one or more embodiments of the present disclosure. FIG. 8a corresponds to a flow chart of an example implementation at the encoder side. The input picture at a given resolution (resolution 0) is resampled at different resolutions (resolution 1 and resolution 2) in step 802 and 804. For example, resolution 1 corresponds to half of resolution 0 (half in width and half in height), and resolution 2 corresponds to twice of resolution 0 (twice in width and twice in height). For each resolution, a film grain analysis process 801, 803, 805 is performed that generates, for each resolution, a specific FGRI SEI message FGRI SEI 0, FGRI SEI 1, FGRI SEI 2. The input picture is encoded at full resolution, i.e. input resolution 0, and in addition the different FGRI SEI versions are inserted 806 in the bitstream.

FIG. 8b corresponds to a flow chart of an example implementation of the fourth embodiment at the decoder and renderer side. The input bitstream is decoded 810. The output of the decoding 810 is the decoded picture and the different FGRI SEI messages. A selection step 811 of the appropriate FGRI SEI version, FRGI SEI i on FIG. 8B, is performed based on the indication from the renderer of the rendering resolution. The decoded picture may be resampled 812 to the rendering resolution (when the decoded picture resolution is different from the rendering resolution). The film grain synthesis is applied 813 to the resampled picture using the selected FGRI SEI i that thus corresponds to the resolution or dimension of the resampled picture. The processed picture is then sent 814 to the renderer.

An example of syntax of a new SEI message comprising an indication of the recommended picture dimensions (or alternatively, maximum picture dimensions) and of the film grain parameters associated to these recommended picture dimensions, is given below.

| | |
|---|---|
| film_grain_resolution_information( payloadSize ) { | **Descriptor** |
| **fgri_characteristics_cancel_flag** | u(1) |
| if( ! fgri_characteristics_cancel_flag ) ζ | |
| **fgri**_**width**_**in_luma**_**samples** | ue(v) |
| **fgri_height_in_luma_samples** | ue(v) |
| **fgri_model_id** | u(2) |
| **fgri_separate_colour_description_present_flag** | u(1) |
| if( fgri_separate_colour_description_present_flag ) { | |
| **fgri_bit_depth_luma_minus8** | u(3) |
| **fgri_bit_depth_chroma_minus8** | u(3) |
| **fgri_full_range_flag** | u(1) |
| **fgri_colour_primaries** | u(8) |
| **fgri_transfer_characteristics** | u(8) |
| **fgri_matrix**_**coeffs** | u(8) |
| } | |
| **fgri_blending_mode_id** | u(2) |
| **fgri_log2 _scale_factor** | u(4) |
| for( c = 0; c < 3; c++ ) | |
| **fgri_comp_model_present_flag[** c ] | u(1) |
| for( c = 0; c < 3; c++ ) | |
| if( fgri_comp_model_present_flag[ c ] ) { | |
| **fgri_num_intensity_intervals_minus1[** c ] | u(8) |
| **fgri_num_model_values_minus1[** c ] | u(3) |
| for( i = 0; i <= fg_num_intensity_intervals_minus1[ c ]; i++ ) { | |
| **fgri_intensity_interval_lower_bound[** c ][ i ] | u(8) |
| **fgri_intensity_interval_upper_bound[** c ][ i ] | u(8) |
| for( j = 0; j <= fg^{_}num_model_values_minus1 [ c ]; j++ ) | |
| **fgri_comp_model_value[** c ][ i ][ j ] | se(v) |
| } | |
| } | |
| | |
| **fgri_characteristics_persistence_flag** | u(1) |
| } | |
| } | |

The semantics of the film grain parameters are the same as the film grain characteristics SEI message as specified in the VSEI specification.

In a variant, instead of creating a new SEI message as described above, a new APS (or an equivalent syntax structure) is created to embed the recommended picture dimensions and the film grain parameters associated to these recommended picture dimensions.

In a variant, the recommended picture dimensions for the FG synthesis are indicated in a film grain regions SEI message currently defined in the Technologies under consideration for future extensions of VSEI document (JVET-AJ2032) which contains draft text for changes under consideration for future extensions to the VSEI specification to modify existing SEI messages, specify additional SEI messages, or specify other functionalities.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
obtaining a film grain picture dimension at which a film grain synthesis should be applied;
obtaining a picture of a video sequence, the picture having a picture dimension;
upon determining that the film grain picture dimension is different from the picture dimension, resampling the picture to the film grain picture dimension; and
applying film grain synthesis to the resampled picture.

2. An apparatus comprising one or more processors, wherein the one or more processors are configured for:
obtaining a film grain picture dimension at which a film grain synthesis should be applied;
obtaining a picture of a video sequence, the picture having a picture dimension;
upon determining that the film grain picture dimension is different from the picture dimension, resampling the picture to the film grain picture dimension; and
applying film grain synthesis to the resampled picture.

3. The method of claim 1 or the apparatus of claim 2, wherein obtaining the film grain picture dimension at which the film grain synthesis should be applied comprises determining that the film grain picture dimension is a maximum picture dimension signaled in a Sequence Parameter Set (SPS) structure of a bitstream.

4. The method of claim 1 or the apparatus of claim 2, wherein, when an adaptive resolution coding is enabled, the film grain picture dimension at which the film grain synthesis should be applied is fixed for the video sequence processed by a decoder.

5. The method of claim 1 or the apparatus of claim 2, wherein, when cropping is applied to the picture, the film grain picture dimension at which the film grain synthesis should be applied is a cropped picture dimension as inferred by cropping window parameters signaled in a Sequence Parameter Set (SPS) structure of a bitstream.

6. The method of claim 1 or the apparatus of claim 2, wherein obtaining film grain picture dimension comprises receiving, in a bitstream, film grain resolution information that comprises at least one parameter that specifies the film grain picture dimension at which the film grain synthesis should be applied.

7. The method of claim 6 or the apparatus of claim 6, wherein the film grain resolution information (FGRI) is signaled in a Supplemental Enhancement Information (SEI) message.

8. The method of claim 7 or the apparatus of claim 7, wherein when several FGRI SEI messages are present in the video sequence, the FGRI SEI messages of the video sequence indicate a same picture dimension.

9. The method of claim 1 or the apparatus of claim 2, wherein obtaining film grain picture dimension comprises:
receiving, in a bitstream, more than one film grain resolution information that comprises at least one parameter that specifies the film grain picture dimension at which the film grain synthesis should be applied;
selecting the recommended film grain resolution that matches the picture dimension.

10. The method of any of claims 1, 3-9 or the apparatus of claim 2-9, wherein a picture dimension comprises a picture width and a picture height.

11. A method comprising:
signaling, in a bitstream, film grain resolution information that comprises at least one parameter that specifies film grain picture dimension at which a film grain synthesis should be applied.

12. An apparatus comprising one or more processors, wherein the one or more processors are configured for:
signaling, in a bitstream, film grain resolution information that comprises at least one parameter that specifies a film grain picture dimension at which a film grain synthesis should be applied.

13. The method of claim 11 or the apparatus of claim 12, wherein the film grain resolution information (FGRI) is signaled in a Supplemental Enhancement Information (SEI) message.

14. The method of claim 13 or the apparatus of claim 13, wherein when several FGRI SEI messages are present in the video sequence, the FGRI SEI messages of a video sequence indicate a same picture dimension.

15. A computer program comprising instructions which when executed by one or more processors cause the one or more processors to perform the method according to any of claims 1, 3-11, 13-14.
